# EUROPÄISCHE PATENTSCHRIFT

(11) **EP 0 767 983 B1**
(45) Veröffentlichungstag und Bekanntmachung des Hinweises auf die Patenterteilung: **01.09.1999**
(21) Anmeldenummer: 95921708.4
(22) Anmeldetag: 14.06.1995
(51) Int. Cl.: H02J 7/00

(54) **VERFAHREN UND VORRICHTUNG ZUM LADUNGSAUSTAUSCH ZWISCHEN EINER VIELZAHL VON IN REIHE GESCHALTETEN ENERGIESPEICHERN ODER -WANDLERN**
PROCESS AND DEVICE FOR CHARGE EXCHANGE BETWEEN A PLURALITY OF SERIES-CONNECTED ENERGY STORES OR CONVERTERS
PROCEDE ET DISPOSITIF PERMETTANT UN ECHANGE DE CHARGE ENTRE PLUSIEURS ACCUMULATEURS OU CONVERTISSEURS D'ENERGIE MONTES EN SERIE

(30) Priorität: 29.06.1994 DE 4422409
(43) Veröffentlichungstag der Anmeldung: 16.04.1997
(73) Patentinhaber: FRAUNHOFER-GESELLSCHAFT ZUR FÖRDERUNG DER ANGEWANDTEN FORSCHUNG E.V., 80636 München (DE)
(72) Erfinder: SCHMIDT, Heribert, D-79312 Emmendingen (DE); JANTSCH, Martin, D-79098 Freiburg (DE)
(74) Vertreter: RACKETTE Partnerschaft Patentanwälte
(86) Internationale Anmeldenummer: DE9500793
(87) Internationale Veröffentlichungsnummer: WO9600999

(56) Entgegenhaltungen:
- EP-A- 0 432 639
- US-A- 4 331 911

## Beschreibung

Die Erfindung betrifft eine Vorrichtung zum Ladungsaustausch zwischen einer Vielzahl von in Reihe geschalteten gleichartigen Energiespeichern oder Energiewandlern.

Eine solche Vorrichtung zur Überwachung von Energiespeichern und zum Ladungsaustausch zwischen diesen ist aus der US-A-4 331 911 bekannt und dient zum Angleichen von Spannungen einzelner, in Reihe geschalteter Akkumulatoren mit einem DC-DC-Wandler. Der einzige zentrale Wandler für alle Akkumulatoren wird aus der Gesamtbatterie gespeist und er ist nicht fähig, durch Alterung auftretende Besonderheiten einzelner Akkumulatoren zu detektieren.

Bis ein solcher, in seiner Speicherungs- und Ladungsqualität absinkender Akkumulator von der Überwachungseinrichtung für Akkumulatoren erkannt wird, führt sein Fehlverhalten zu einer Kette von Reaktionen in der Gruppe der Akkumulatoren, was zu einer Degradation auch der anderen Akkumulatoren führt.

In der DE-PS 30 31 931 ist eine Vorrichtung zur Verlängerung der Entladungsdauer von wiederaufladbaren Akkumulatoren beschrieben, bei der mit einer Überwachungseinrichtung die Spannungszustände der Akkumulatoren erfaßt werden. Es wird eine längere betriebssichere Entladung der Akkumulatoren dadurch bewirkt, daß der Akkumulatorbetrieb nicht bei Entladung und damit bei Erreichen einer Grenzspannung der schwächsten Zelle beendet wird, sondern erst, wenn diese Grenzspannung im Mittel aller zusammengeschalteten Akkumulatoren erreicht wird. Eine Verlängerung der Standzeit von Akkumulatoren im Hinblick auf ihre Auswechslung läßt sich damit nicht erreichen.

Aus der SU 1 065 959 ist eine Vorrichtung für ein Akkumulatorladegerät bekannt, mit der das Überladen und das Laden mit Falschpolung von Akkumulatoren verhindert wird. Dabei wird der Ladestrom über eine Transistorschaltung überwacht, die weiterhin Zenerdioden umfaßt. Diese Schutzschaltung kann jedoch weder die Überwachung der Qualität der Akkumulatoren gewährleisten, noch eine längere Standzeit von in ihrer Qualität schlechter werdenden Akkumulatoren bewirken.

Aus der EP-A-O 432 639 der Anmelderin ist eine Überwachungseinrichtung für eine Vielzahl von in Reihe geschalteten, gleichartigen Akkumulatoren bekannt, die einen Ladungsaustausch zwischen diesen Akkumulatoren ermöglicht. Dabei wird mit Hilfe einer Steuerschaltung ein elektrischer Speichers parallel zu einem der Akkumulatoren zugeschaltet, wobei die Primärwicklung eines Transformators in Reihe mit einem an die Steuerschaltung angeschlossenen Unterbrecher parallel zu den Polen der Gruppe von Akkumulatoren verbunden ist. Der elektrische Speicher wird jeweils aus der Sekundärwicklung gebildet, die über jeweils eine sperrende Diode mit jedem Akkumulator verbunden ist. Über eine Vergleichsschaltung wird bei Auftreten eines Differenzsignals in der Steuerschaltung zwischen den Akkumulatoren ein Funktionsgenerator angeschaltet, dessen Ausgang mit dem Unterbrecher verbunden ist. Damit kann gezielt dem schwächsten Akkumulator Energie zugeführt werden. Diese Anlage weist für kleine Anwendungen den Nachteil einer Vielzahl von steuernden Elementen auf, die einen Kosten- und ggf. einen Raum- und Gewichtsfaktor darstellen. Zugleich ist neben dem erheblichen Aufwand für die Selektion der jeweiligen schwachen oder starken Zelle der Leistungsbereich der jeweils eingesetzten Sperrwandler nach oben begrenzt.

Ausgehend von diesem Stand der Technik liegt der Erfindung die Aufgabe zugrunde, eine Vorrichtung der eingangs genannten Art zu schaffen, bei der der Austausch eines in seiner Qualität schlechteren Akkumulators mit einem geringeren Schaltungsaufwand gegenüber dem Stand der Technik hinausgezögert werden kann.

Diese Aufgabe wird durch den Gegenstand der Ansprüche 1 und 6 gelöst.

Die sich mit einer Umschaltfrequenz zB. im Kilohertzbereich öffnenden und schließenden Unterbrecher bilden zusammen mit dem Transformator eine transformatorische Kopplung und damit eine virtuelle Parallelschaltung der in Serie angeordneten Energiespeicher, zumeist Akkumulatoren. Dabei geschieht ein Ladungsaustausch direkt und gezielt über die transformatorische Kopplung in den schwächsten der Akkumulatoren, ohne daß die anderen Akkumulatoren mit Hilfe von Schaltern und einer Vergleichsschaltung von dem Transformator abgekoppelt werden müssen, so daß der gewünschte Stromfluß aus den jeweils stärkeren Akkumulatoren direkt in den schwachen Akkumulator fließt und dessen Ladungszustand stützt.

Dies führt dazu, daß im Idealfall die Abweichungen der Zellenspannungen untereinander zu Null werden, wohingegen beim Stand der Technik nach der US-A-4 331 911 zur Vermeidung von im Kreise fließenden Strömen das Übersetzungsverhältnis des eingesetzten Transformators gerade so gewählt worden ist, daß die auf der Sekundärseite induzierten Spannungen immer etwas kleiner als die mittlere Batteriespannung sind. Damit kann durch die Sperrwirkung der Dioden immer nur ein deutlicher Spannungsunterschied zwischen einer fiktiven durchschnittlichen Zelle und der qualitativ schlechten Zelle zu einem Stromfluß in diese betreffende Zelle führen.

Bei der hier vorgeschlagenen Vorrichtung wird die Energie nicht der Gesamtbatterie oder der Gesamtanordnung entnommen, sondern es ist durch die magnetische Verkopplung aller Wicklungen über den gemeinsamen Kern und durch das synchrone Umschalten aller Wicklungen der direkte Stromfluß von Zellen höherer Spannung in solche mit geringerer Spannung möglich.

Weitere Ausgestaltungen der Erfindung sind in den Unteransprüchen gekennzeichnet.

Nachfolgend werden sieben Ausführungsbeispiele der Erfindung anhand der Zeichnung näher erläutert Es zeigen:
- Fig. 1: ein Ausschnitt eines Schaltbildes einer Vorrichtung zum Ladungsausgleich für in diesem Ausschnitt dargestellte drei Akkumulatoren gemäß einem ersten Ausführungsbeispiel,
- Fig. 2: ein Ausschnitt eines Schaltbildes einer weiteren Vorrichtung zum Ladungsausgleich für in diesem Ausschnitt dargestellte vier Akkumulatoren gemäß einem zweiten Ausführungsbeispiel,
- Fig. 3: ein Ausschnitt eines Schaltbildes einer weiteren Vorrichtung zum Ladungsausgleich für in diesem Ausschnitt dargestellte drei Akkumulatoren gemäß einem dritten Ausführungsbeispiel,
- Fig. 4: ein Ausschnitt eines Schaltbildes einer Vorrichtung zum Ladungsausgleich für zwei Gruppen von gemäß Fig. 3 verschalteten Gruppen von Akkumulatoren gemäß einem vierten Ausführungsbeispiel,
- Fig. 5: ein Ausschnitt eines Schaltbildes einer Vorrichtung zum Ladungsausgleich für zwei Gruppen von gemäß Fig. 3 verschalteten Gruppen von Akkumulatoren gemäß einem fünften Ausführungsbeispiel,
- Fig. 6: ein Ausschnitt eines Schaltbildes einer weiteren Vorrichtung zum Ladungsausgleich für in diesem Ausschnitt dargestellte zwei Akkumulatoren gemäß einem sechsten Ausführungsbeispiel,
- Fig. 7: ein Ausschnitt eines Schaltbildes einer weiteren Vorrichtung zum Ladungsausgleich für in diesem Ausschnitt dargestellte drei Akkumulatoren gemäß einem siebten Ausführungsbeispiel, und
- Fig. 8: ein Blockschaltbild für eine Ablaufsteuerung für eine Vorrichtung zum Ladungsausgleich gemäß einem der Ausführungsbeispiele.

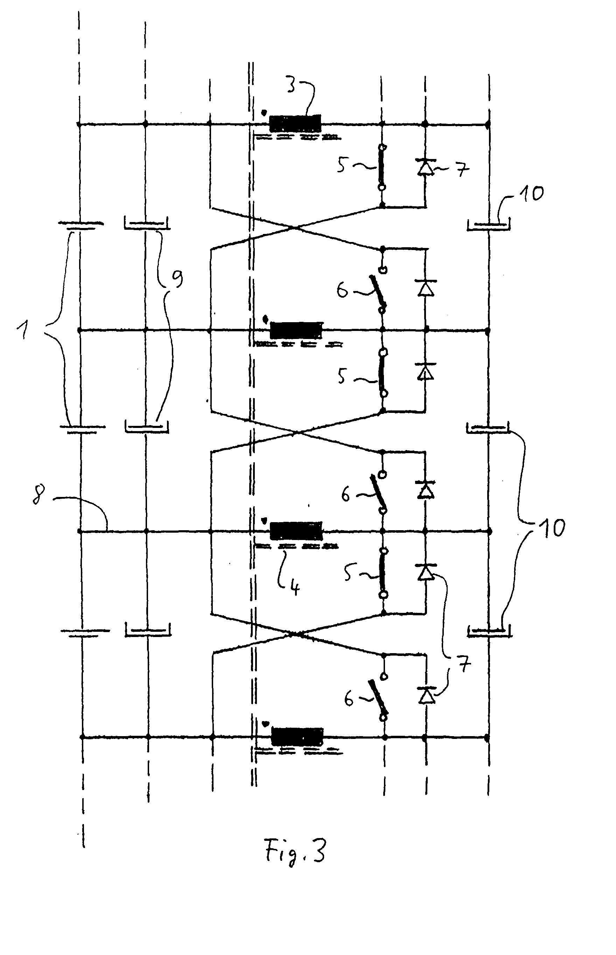

Es sind natürlich eine Vielzahl von Realisierungsmöglichkeiten von Schaltungen zur Durchführung des Verfahrens möglich, von denen in der Folge drei dargestellt werden. Weiterhin werden zwei Möglichkeiten herausgegriffen, eine größere Anzahl von Akkumulatoren 1, hier für nach Fig. 3 verschaltete, in einer Kaskade zusammenzuschalten und die transformatorische Kopplung über alle Akkumulatoren 1 nicht zu verlieren.

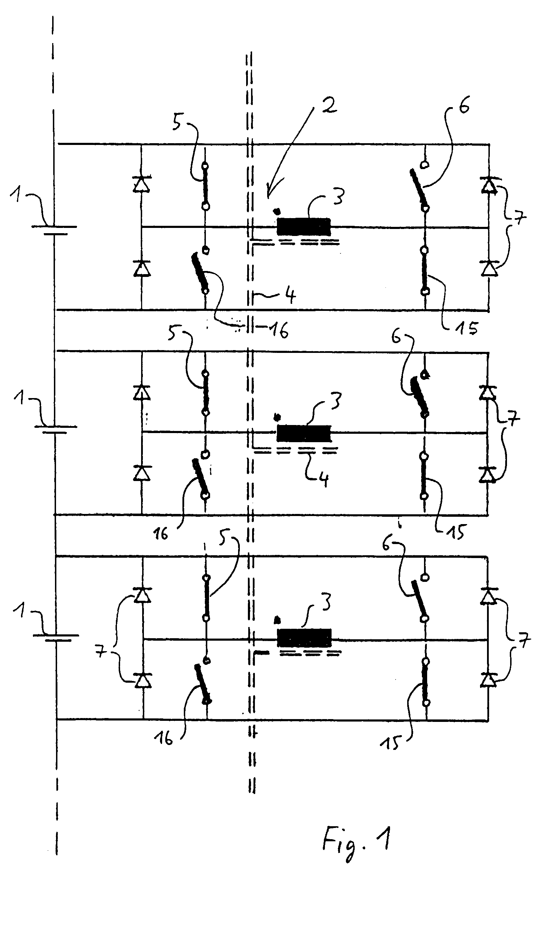

Die Fig. 1 zeigt einen Ausschnitt eines Schaltbildes einer Vorrichtung zum Ladungsausgleich für im Ausschnitt dargestellte drei Akkumulatoren 1 gemäß einem ersten Ausführungsbeispiel. Diese können eine einzelne Gruppe von drei Akkumulatoren 1 bilden oder, wie durch die strichlinierten Verbindungsleitungen angedeutet, Teile einer größeren, z.B. 10 bis 12 Akkumulatoren 1 umfassenden Batteriebank sein. Neben Akkumulatoren 1 als Energiespeicher kann die Vorrichtung auch für Energiewandler wie Brennstoffzellen eingesetzt werden.

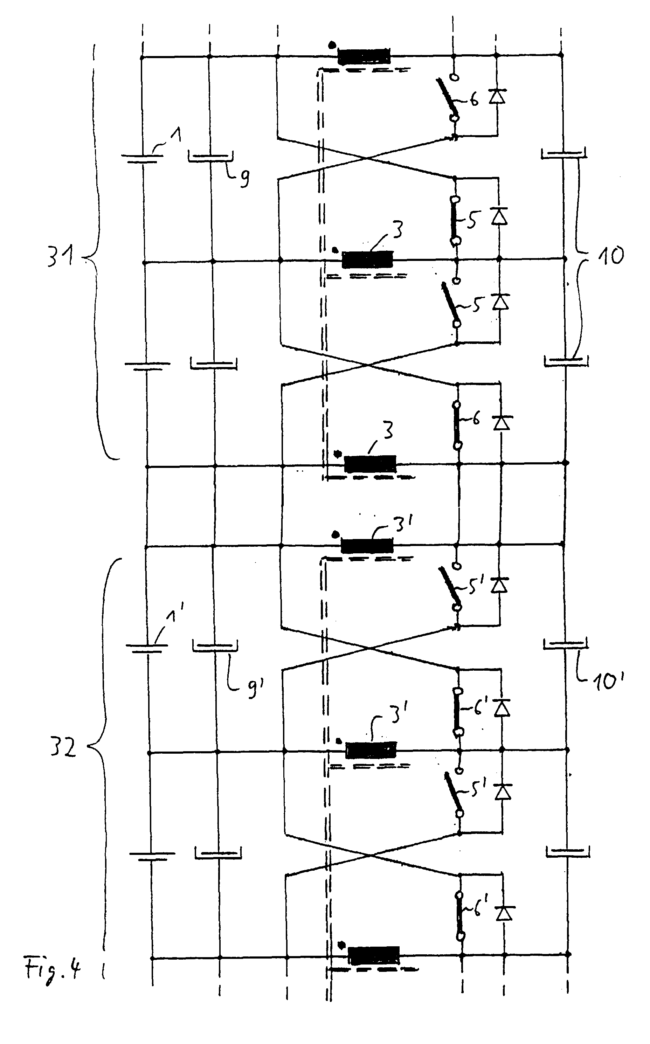

Es ist ein Transformator 2 vorgesehen, der über hier drei gleiche Wicklungen 3 verfügt, die alle im gleichen durch den Punkt angedeuteten Richtungssinn auf einem gemeinsamen Kern 4 in enger magnetischer Kopplung angeordnet sind. Damit ist hier jeweils eine einen Energiespeicher bildende Wicklung 3 einem Akkumulator 1 zugeordnet. Durch diese gemeinsame Wicklung auf einem gemeinsamen Kern 4 ist technisch gesehen eine maximale Anzahl von Wicklungen 3 und damit von Akkumulatoren 1 vorgegeben, die über den einzelnen Kern 4 zusammengeschaltet werden können. Soll eine größere Anzahl von Akkumulatoren 1 zusammengeschaltet werden, so ist der Einsatz einer Kaskadierung, z.B. nach dem Prinzip der Fig. 4, notwendig.

Die Wicklungen 3 werden nun mit Hilfe von den Schalterpaaren 5, 15 und 6, 16 mit einem Tastverhältnis von weniger als 50 Prozent abwechselnd mit den Polen des zugehörigen Akkumulators 1 verbunden. Die Schalter 5, 6, 15, 16 sind in demjenigen Taktschritt dargestellt, in dem die Schalter 5 und 15 geschlossen sind, so daß jeweils der Wicklungsanfang mit dem auf dem Zeichnungsblatt oben liegenden Pol jeden Akkumulators 1 verbunden ist. Im nächsten, nicht dargestellten Taktschritt schließen dann die Schalter 6 und 16, während die Schalter 5 und 15 offen sind, so daß jede Wicklung 3 in anders gepolter Richtung zu ihrem Akkumulator 1 parallel geschaltet ist.

Die Schalter 5, 6, 15 und 16 sind jeweils mit entsprechenden Ausgängen eines Taktgebers verbunden, der in der Zeichnung nicht dargestellt ist, und mit dem eine Taktfrequenz von vorzugsweise mehr als 20 kHz erzeugbar ist.

Durch die enge magnetische Kopplung wird in allen Wicklungen 3, also insbesondere in den hier dargestellten drei Wicklungen 3 die gleiche Spannung induziert. Weist nun ein Akkumulator 1 durch Alterung oder sonstige Einflüsse eine niedrigere Spannung auf, so fließt direkt ein entsprechender Strom in diese Zelle.

Die bis jetzt beschriebene Schaltung ist voll funktionsfähig. Vorzugsweise werden aber noch die in der Fig. 1 dargestellten Dioden 7 jeweils über die Schalter 5, 6, 15 und 16 geschaltet, um als Freilaufdioden kurzfristig einen eventuell fließenden Strom zu übernehmen, da beim Taktwechsel zur Vermeidung von Kurzschlüssen über gleichzeitig leitende Schalter eine kurze Taktpause erforderlich ist

Das Schaltungsprinzip der Fig. 1 erfordert für N Akkumulatoren 1 N Wicklungen 3 und 4•N Schalter 5, 6, 15 und 16.

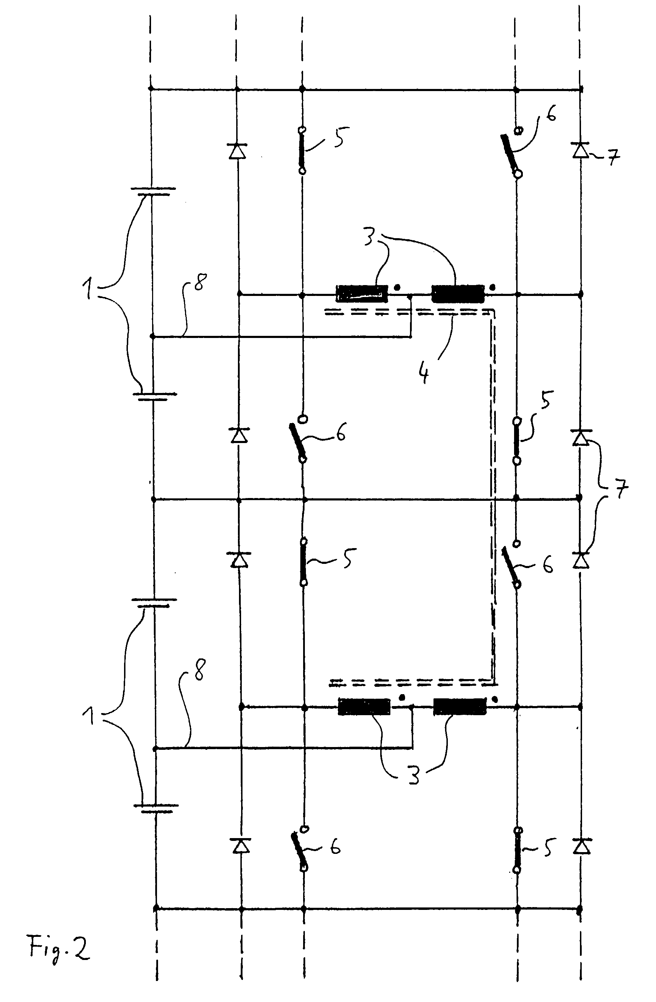

Die Fig. 2 zeigt einen Ausschnitt eines Schaltbildes einer weiteren Vorrichtung zum Ladungsausgleich für die in diesem Ausschnitt dargestellten vier Akkumulatoren 1 gemäß einem zweiten Ausführungsbeispiel. Gleiche Merkmale sind in allen Fig. mit gleichen Bezugszeichen versehen. Bei der Schaltung nach Fig. 2 handelt es sich um ein Ausführungsbeispiel für eine gerade Anzahl von Akkumulatoren 1. Von diesen immer in Zweier-Gruppen angeordneten Akkumulatoren 1 sind in der Fig. 2 zwei Paare dargestellt. Wie leicht zu erkennen ist, erfordert diese Schaltung für N Akkumulatoren 1 auch N Wicklungen 3 aber nur noch 2•N Schalter 5 und 6.

Bei dieser Schaltung wird in den zwei Taktschritten nicht mehr die gleiche Wicklung 3 in umgepolter Anordnung an den Akkumulator 1 angelegt sondern es sind jeweils zwei Akkumulatoren 1 gemeinsam zwei Wicklungen 3 zugeordnet, die wechselweise an die beiden Akkumulatoren 1 angeschaltet werden, wobei durch den gemeinsamen Mittelanschluß 8 zwischen den Akkumulatoren 1 die Polung der Wicklung 3 beim Anschalten zwischen den beiden Akkumulatoren 1 umklappt. Es sind auch wieder die Dioden 7 zum Schutz der Schaltung vorgesehen.

Die Fig. 3 zeigt einen Ausschnitt eines Schaltbildes einer weiteren Vorrichtung zum Ladungsausgleich für im Ausschnitt dargestellte drei Akkumulatoren 1 gemäß einem dritten Ausführungsbeispiel. Dieses Ausführungsbeispiel stellt die bevorzugte Ausführungsform der Schaltung da. Bei dieser Realisierung sind für N Akkumulatoren N+1 Wicklungen und 2•N Schalter notwendig. Dabei sind die Wicklungen 3 jeweils zwei Akkumulatoren 1 zugeordnet, die in der Fig. 3 benachbart angeordnet sind. Dies ist natürlich nicht notwendig, nur muß gewährleistet bleiben, daß jede Wicklung 3 zwei Akkumulatoren 1 in unterschiedlicher Polung zugeordnet ist und daß jedem Akkumulator 1 zwei Wicklungen mit entgegengesetzter Polung zuschaltet werden. Dabei sind benachbarte Akkumulatoren 1 natürlich besonders geeignet, da dann ein einfaches "Umklappen" der Wicklung 3 um den Mittelanschluß 8 möglich ist, um die für den Transformator 2 notwendige Wechselspannung zu erzeugen und diese Vorrichtung gerade erst den Einsatz der genannten kleinen Anzahl von Schaltern 5 und 6 gestattet.

Da jede Wicklung 3 mit den beiden benachbarten Akkumulatoren 1 zusammenwirkt, laufen je nach Schalterzustand abwechselnd die oberste bzw. die unterste Wicklung 3 leer.

Die Fig. 3 zeigt darüberhinaus den Einsatz von Kondensatoren 9 zur Unterdrückung von hochfrequenten Störspannungen auf den Anschlußleitungen der Akkumulatoren 1. Diese Glättungskondesatoren 9 werden vorteilhafterweise auch in den Schaltungen nach Fig. 1 und 2 eingesetzt und sind dort der Übersichtlichkeit halber weggelassen worden. Die weiteren Kondensatoren 10 sind dazu vorgesehen, die in Streuinduktivitäten gespeicherte Energie aufzunehmen und verlustfrei zurückzugeben. Die Schaltung kann so das Auftreten von Spannungsspitzen problemlos verkraften.

Die Fig. 4 zeigt einen Ausschnitt eines Schaltbildes einer Vorrichtung zum Ladungsausgleich für zwei Gruppen 31 und 32 von gemäß Fig. 3 verschalteten Gruppen von Akkumulatoren 1 gemäß einem vierten Ausführungsbeispiel. Die Elemente der zweiten Gruppe 32 sind im Gegensatz zu der ersten Gruppe 31 mit gestrichenen Bezugszeichen versehen.

Wie schon zu Beginn der Figurenbeschreibung erläutert, führt die Anzahl der auf den gemeinsamen Kern 4 aufzubringenden Wicklungen 3 zu technischen Problemen bei einer größeren Anzahl von solchen Wicklungen 3, die ja im wesentlichen proportional zu der Zahl der zu verschaltenden Akkumulatoren 1 vorliegen. Dann müssen Teilsysteme mit einer Schaltung, z.B. nach einer der Fig. 1 bis 3, eingesetzt werden, die anschließend in geeigneter Weise miteinander verbunden, d.h. die transformatorisch verkoppelt sind Die Fig. 4 zeigt eine erste Realisierung einer solchen Kaskadierung. Dabei sind zwei Akkumulator-Gruppen 31 und 32 teilweise dargestellt, die am Verbindungspunkt in einer Kettenstruktur angeordnet werden, wobei Punkte gleichen Potentials miteinander verbunden werden. Dabei muß zusätzlich darauf geachtet werden, daß die Schalter 5 und 5' bzw. 6 und 6' synchron angesteuert werden.

Durch die Parallelschaltung der beiden Teilwicklungen 3 und 3' am Koppelpunkt haben beide identische Spannungen, so daß beim Auftreten einer Spannungsdifferenz zwischen den beiden Teilgruppen 31 und 32 an dieser Stelle ein Ausgleichsstrom fließen kann. Durch den jeweils letzten, bzw. ersten, Schalter 6 bzw. 5' ist gewährleistet, daß der Transformator 2 mit dem Transformator 2' verkoppelt und damit die Batteriebank der ersten Gruppe 31 mit der Batteriebank der zweiten Gruppe 32 verbunden ist.

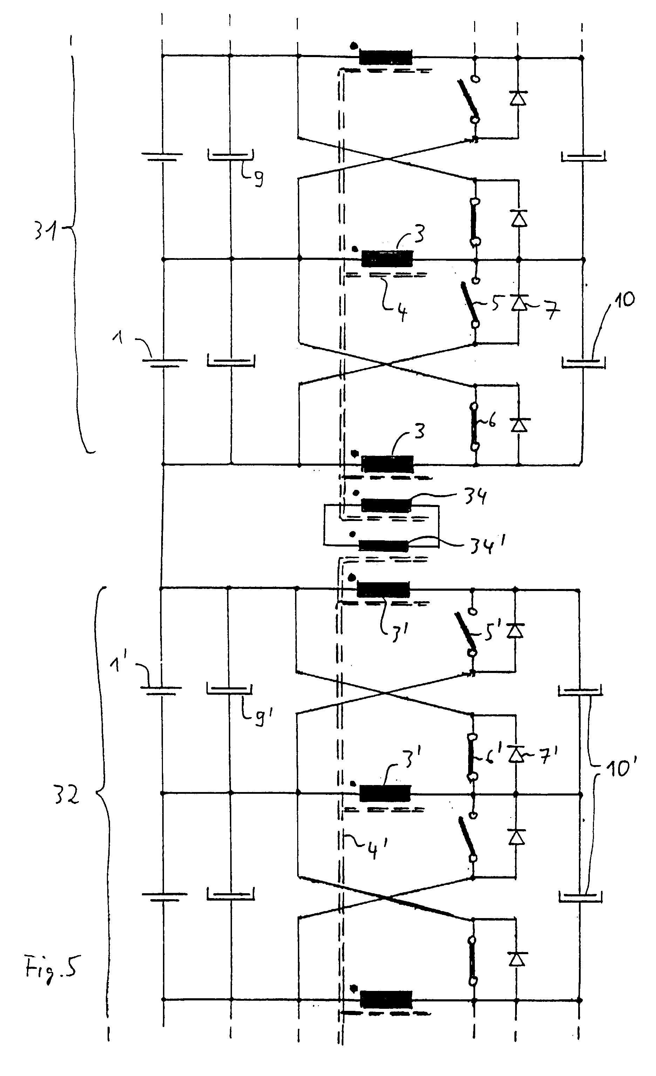

Die Fig. 5 zeigt einen Ausschnitt eines weiteren Schaltbildes einer Vorrichtung zum Ladungsausgleich für zwei Gruppen 31 und 32 von gemäß Fig. 3 verschalteten Gruppen von Akkumulatoren gemäß einem fünften Ausführungsbeispiel. Hier ist im Unterschied zu der Schaltung nach Fig. 4 jeweils eine weitere Wicklung 34 bzw. 34' auf dem Kern 4 bzw. 4' vorgesehen, die dann mit allen übrigen parallel geschaltet ist. Die Fig. 5 zeigt diese Realisierung für nur zwei Wicklungen 34 und 34'. Dabei ergibt sich eine sternförmige Kopplung, über die ein ausgleichender Energiefluß zwischen den Teilsystemen möglich ist. Dem Nachteil der zusätzlichen Wicklungen 34 bzw. 34' auf den gemeinsamen Kernen 4 bzw. 4' steht der Vorteil gegenüber, daß direkt ein Energiefluß aus einer beliebigen Akkumulator-Gruppe in jede andere Akkumulator-Gruppe möglich ist. Wie auch bei der Schaltung nach Fig. 4 ist auch hier bei der Schaltung nach Fig. 5 eine genaue Synchronisation des Umschaltvorganges aller Schalter 5 und 5', bzw. 6 und 6' (und eventuell weiterer Schalter 5 bzw. 6) und damit des oder der Taktgeber notwendig.

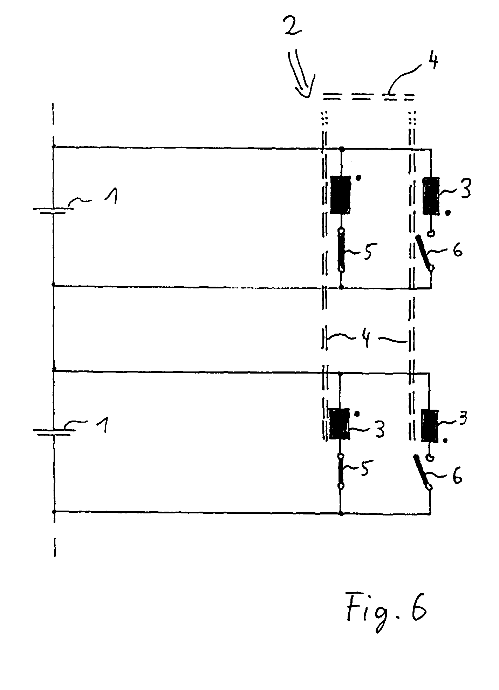

Die Fig. 6 zeigt einen Ausschnitt eines Schaltbildes einer weiteren Vorrichtung zum Ladungsausgleich für in diesem Ausschnitt dargestellte zwei Akkumulatoren 1 gemäß einem sechsten Ausführungsbeispiel. Bei dieser Schaltung sind aus Vereinfachungsgründen die in den anderen Figuren dargestellten Dioden 7 sowie die Kondensatoren 9 und 10 nicht dargestellt, da sie zum Verständnis der Arbeitsweise der Schaltung nicht notwendig sind. Es sind zwei in Reihe geschaltete Akkumulatoren 2 dargestellt, die Teil einer eine Vielzahl von Akkumulatoren beinhaltenden Batteriebank sind. Jedem der Akkumulatoren 1 sind zwei Wicklungen 3 mit unterschiedlichem Wicklungssinn zugeordnet Diese Wicklungen 3 mit jeweils bezüglich ihrer Anschaltung an den Akkumulator 1 unterschiedlichem Wicklungssinn sind in Reihe mit jeweils einem Schalter 5 bzw. 6 verbunden. Sie sind auf einem gemeinsamen Kern 4 angeordnet.

Durch das aufeinanderfolgende Schließen der Schalter 5 bzw. 6 in dem genannten Tastverhältnis von weniger als 50% wird jeweils jede der beiden einem Akkumulator 1 zugeordnete Wicklung 3 mit dem Akkumulator 1 parallel verbunden, wobei jeweils alle Akkumulatoren virtuell parallel geschaltet sind. Bei diesem Ausführungsbeispiel sind für N Akkumulatoren 2•N Wicklungen und 2•N Schalter notwendig.

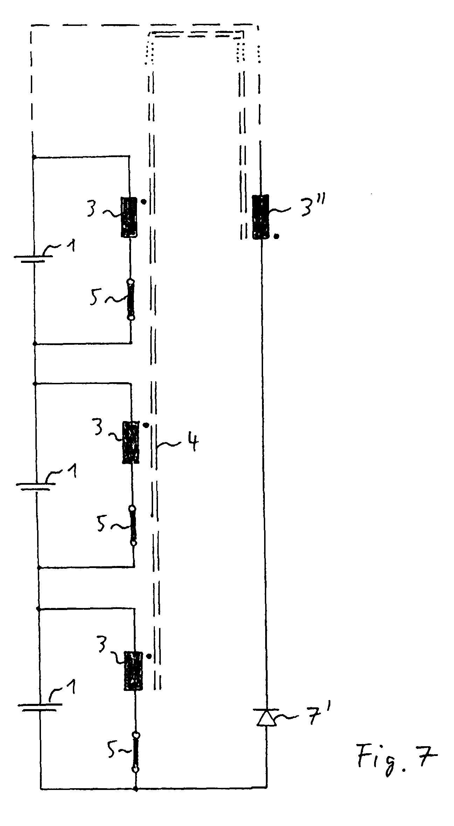

Die Fig. 7 zeigt einen Ausschnitt eines Schaltbildes einer weiteren Vorrichtung zum Ladungsausgleich für in diesem Ausschnitt dargestellte drei Akkumulatoren gemäß einem siebten Ausführungsbeispiel. Diese Fig. 7 ähnelt der Vorrichtung gemäß Fig. 6, wobei die Wicklungen 3, die im gleichen Richtungssinn an die Akkumulatoren 1 angeschaltet werden, mit jeweils einem Schalter 5 versehen sind, wohingegen hier für die zweite Taktperiode eine für alle Akkumulatoren 1 gemeinsame Entmagnetisierungswicklung 3" vorgesehen ist, die über eine Diode 7' über die Gesamtbatterie geschaltet wird. Der eigentliche Ladungsaustausch findet hier in der Einschaltphase in der ersten Taktperiode statt. Diese kann bei geeigneter Wahl der Wicklungen 3 und 3" auch über 50% eines Taktes ausmachen, da die Entmagnetisierung rasch erfolgen kann. Bei diesem Ausführungsbeispiel sind für N Akkumulatoren N+1 Wicklungen und nur N Schalter notwendig. Auch bei den Ausführungsbeispielen nach Fig. 6 und 7 ist eine kaskadenförmige oder sternförmige Verkopplung von Teilsystemen möglich.

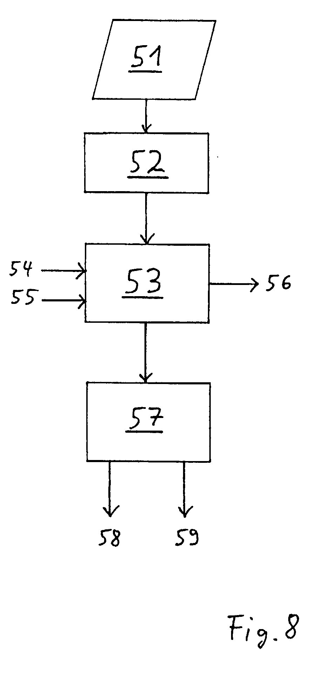

Die Fig. 8 zeigt ein Blockschaltbild für eine Ablaufsteuerung für eine Vorrichtung zum Ladungsausgleich gemäß einem der Ausführungsbeispiele. Dabei ist eine Aktivierschaltung 51 vorgesehen, die durch eine Vielzahl von Ereignissen je nach Einsatzzweck ausgelöst werden kann. Dabei kann es sich um einen einfachen manuellen Ein-/Aus-Schalter handeln, der z.B. durch das Äquivalent eines Zündschlosses bei einem akkumulatorgetriebenen Fahrzeug gebildet sein kann.

Die Schaltung kann auch einen Spannungskomparator aufweisen, der einen Schaltimpuls an den Ausgang der Schaltung weitergibt, wenn der Absolutwert der Batteriespannung innerhalb oder besser außerhalb vorbestimmter Werte liegt. Diese könnten z.B. bei einem Blei-Akkumulator 1 bei einer Spannung von größer als 2,2 Volt oder kleiner als 1,95 Volt liegen. Eine Spannung eines Akkumulators 1 außerhalb dieser Werte läßt auf einen Ladungs- oder Entladungsvorgang schließen, bei dem der Ladungsausgleich vonstatten gehen sollte.

Es könnte auch ein Detektor vorgesehen sein, mit dem eine Dynamik des Batteriespannung nachweisbar ist, die auf schnelle Lastwechsel hindeutet, wie diese beim Betrieb eines Elektrofahrzeugs auftreten. Weiterhin könnte auch das Abweichen der Spannung einzelner Akkumulatoren 1 von einem momentanen Mittelwert des Gesamtsystems als Auslöser für die Aktivierschaltung 51 vorgesehen sein. Schließlich kann die Schaltung zum Ladungsausgleich z.B. auch periodisch, z.B. alle 3 Stunden, anlaufen.

Wenn die Aktivierschaltung 51 einen Startimpuls nach einer der vorgenannten Bedingungen erzeugt, die einzeln aber auch zu mehreren geprüft werden können, steuert dieser beispielsweise einen Monoflop 52 an, der für eine vorbestimmte Zeitdauer, z.B. eine halbe Stunde, die Vorrichtung zum Ladungsaustausch anstellt, oder diese Zeitdauer wird durch ein Merkmal der angeschalteten Last festgelegt. Die Vorrichtung wird durch eine Logikeinheit 53 überwacht, der weitere Signale 54 und 55 zur Detektion eines Überstromes in oder einer Übertemperatur von Bauteilen wie Transistoren oder Wicklungen zugeführt werden. Diese Schaltung 53 kann auch einen Ausgang 56 für eine Anzeige für Status- oder Steuersignale aufweisen, z.B. für einen Lastabwurf. Diese Logikeinheit 53 steuert den Taktgenerator 57 an, an dessen Ausgängen 58 und 59 die Steuereingänge der Schalter 5 bzw. 6 angeschlossen werden.

## Patentansprüche

1. Vorrichtung zum Ladungsaustausch zwischen einer Vielzahl von in Reihe geschalteten gleichartigen Energiespeichern oder Energiewandlern (1), bei der den Energiespeichern (1) mittels getakteten Schaltern (5, 6, 5', 6', 15, 16) jeweils gleich bemessene und gepolte Wicklungen (3) mindestens eines gemeinsamen Transformators (2) synchron mit gleicher taktweise wechselnder Polung zugeordnet werden, so daß an den Wicklungen (3) taktfrequente Wechselspannungen entstehen und sich ein Energiefluß einstellt, der zu einem Ladungsausgleich zwischen den somit mittels induktiver Kopplung parallel geschalteten Energiespeichern (1) führt.

2. Vorrichtung nach Anspruch 1, dadurch gekennzeichnet, daß jedem Energiespeicher (1) zwei jeweils gleich bemessene und gepolte Wicklungen (3) genau eines gemeinsamen Transformators (2) zugeordnet sind, daß diese zwei Wicklungen (3) auch jeweils einem zweiten bzw. dritten Energiespeicher (1) zugeordnet sind, wobei jede der Wicklungen (3) in jeweils jedem zweiten Taktschritt parallel zu dem erstgenannten Energiespeicher (1) in jeweils gleicher Polung zugeschaltet wird und in den jeweils anderen Taktschritten in umgekehrter und dabei auch jeweils gleichbleibender Polung dem zweiten bzw. dritten Energiespeicher (1) zugeschaltet wird.

3. Vorrichtung nach Anspruch 1, dadurch gekennzeichnet, daß jedem der Energiespeicher (1) genau eine jeweils gleich bemessene und gepolte Wicklung (3) genau eines gemeinsamen Transformators (2) zugeordnet ist, wobei diese Wicklungen (3) jeweils mit gleicher taktweise wechselnder Polung dem ihnen jeweils zugeordneten Energiespeicher (1) zugeschaltet werden.

4. Vorrichtung nach Anspruch 1, dadurch gekennzeichnet, daß jedem der Energiespeicher (1) genau zwei jeweils gleich bemessene und umgekehrt gepolte Wicklungen (3) genau eines gemeinsamen Transformators (2) zugeordnet sind, wobei diese Wicklungen (3) jeweils wechselnd dem ihnen zugeordneten Energiespeicher (1) zugeschaltet werden.

5. Vorrichtung nach einem der Ansprüche 1 bis 4, dadurch gekennzeichnet, daß eine Vielzahl von in Reihe geschalteten Energiespeichern (1) in Gruppen von Energiespeichern (31, 32) aufgeteilt werden, deren Wicklungen (3, bzw. 3') jeweils einem gemeinsamen Transformator je Gruppe zugeordnet sind, wobei jeweils zwei Endwicklungen (3, bzw. 3') oder zwei weitere keinem Energiespeicher zugewiesene Wicklungen (34 bzw. 34') gekoppelt sind.

6. Vorrichtung zum Ladungsaustausch zwischen einer Vielzahl von in Reihe geschalteten gleichartigen Energiespeichern oder Energiewandlern (1), bei der den Energiespeichern (1) mittels getakteten Schaltern (5) jeweils gleich bemessene und gepolte Wicklungen (3) mindestens eines gemeinsamen Transformators (2) synchron mit gleicher Polung zugeordnet werden, bei der eine weitere Entmagnetisierungswicklung (3") über die Gesamtheit der gleichartigen Energiespeicher oder Energiewandler (1) geschaltet ist, so daß sich ein Energiefluß von den Wicklungen (3) über die Entmagnetisierungswicklung (3") in die Gesamtheit der Energiespeicher oder Energiewandler (1) einstellt, der zu einem Ladungsausgleich zwischen den somit mittels induktiver Kopplung parallel geschalteten Energiespeichern (1) führt.

7. Vorrichtung nach einem der Ansprüche 1 bis 6, dadurch gekennzeichnet, daß der Taktgeber von einer Ablaufsteuerung (51, 52, 53) ansteuerbar ist, die über eine Aktivierschaltung (51) für einen vorbestimmbaren oder von einer angeschalteten Last bestimmten Zeitraum einschaltbar ist.

## Claims

1. Apparatus for charge exchange between a plurality of series-connected similar energy stores or energy converters (1), in which identically sized and poled windings (3) of at least one common transformer (2) are respectively associated synchronously with the same cyclically alternating polarity with the energy stores (1) by means of clock-controlled switches (5, 6, 5', 6', 15, 16), so that clock-frequency alternating voltages are produced at the windings (3) and there is an energy flow which results in charge equalisation between the energy stores (1) which are thus connected in parallel by means of inductive coupling.

2. Apparatus according to claim 1 characterised in that two respective identically sized and poled windings (3) of precisely one common transformer (2) are associated with each energy store (1), that those two windings (3) are also respectively associated with a second and a third energy store (1) respectively, wherein each of the windings (3) is connected in each respective second clock step in parallel to the first-mentioned energy store (1) in the respective identical polarity and in the respective other clock steps is connected to the second and third energy store (1) respectively in the reversed polarity which in that respect also respectively remains the same.

3. Apparatus according to claim 1 characterised in that precisely one respective identically sized and poled winding (3) of precisely one common transformer (2) is associated with each of the energy stores (1), wherein said windings (3) are respectively connected with the same cyclically alternating polarity with the energy store (1) which is respectively associated with them.

4. Apparatus according to claim 1 characterised in that precisely two respective identically sized and reversely poled windings (3) of precisely one common transformer (2) are associated with each of the energy stores (1), wherein said windings (3) are respectively connected alternately to the energy store (1) which is associated with them.

5. Apparatus according to one of claims 1 to 4 characterised in that a plurality of series-connected energy stores (1) are divided into groups of energy stores (31, 32), the windings (3 and 3' respectively) of which are respectively associated with a common transformer per group, wherein two respective end windings (3 and 3' respectively) or two further respective windings (34 and 34') which are not allocated to an energy store are coupled.

6. Apparatus for charge exchange between a plurality of series-connected similar energy stores or energy converters (1), in which identically sized and poled windings (3) of at least one common transformer (2) are respectively associated synchronously with the same polarity with the energy stores (1) by means of clock-controlled switches (5), in which a further demagnetisation winding (3") is connected across all of the similar energy stores or energy converters (1) so that a flow of energy is produced from the windings (3) by way of the demagnetisation winding (3") into all of the energy stores or energy converters (1), which results in charge equalisation between the energy stores (1) which are thus connected in parallel by means of inductive coupling.

7. Apparatus according to one of claims 1 to 6 characterised in that the clock is actuable by an operational control (51, 52, 53) which can be switched on by way of an activation circuit (51) for a predeterminable period of time or a period of time which is determined by a connected load.

## Revendications

1. Dispositif pour l'échange de charge entre une pluralité d'accumulateurs ou convertisseurs d'énergie (1) identiques montés en série, par lequel lesdits accumulateurs d'énergie (1) sont connectés de manière synchrone , au moyen de commutateurs rythmés (5, 6, 5', 6', 15, 16), à des enroulements (3) de dimensions et polarité respectivement identiques, d'au moins un transformateur commun (2) à même alternance rythmée de polarité, de telle manière que sur lesdits enroulements (3) apparaissent des tensions alternatives à fréquence rythmée et que s'établit un flux d'énergie qui conduit à un échange de charge entre les accumulateurs d'énergie (1) qui de ce fait se trouvent montés en parallèle par couplage inductif.

2. Dispositif selon la revendication 1, caractérisé en ce qu'à chaque accumulateur d'énergie (1) sont connectés de manière synchrone deux enroulements (3) de dimensions et polarité respectivement identiques d'un transformateur commun (2), que ces deux enroulements (3) sont aussi connectés respectivement à un deuxième ou un troisième accumulateur d'énergie (1), la connexion de chacun desdits enroulements (3) à l'accumulateur d'énergie (1) cité en premier s'effectuant à la même polarité respective pendant respectivement une période rythmée sur deux, tandis que pendant les autres périodes s'effectue la connexion au deuxième ou au troisième accumulateur d'énergie (1) en polarité inverse et donc aussi respectivement inchangée.

3. Dispositif selon la revendication 1, caractérisé en ce qu'à chaque accumulateur d'énergie (1) est connecté de manière exactement synchrone un enroulement (3) de dimensions et polarité identiques d'un transformateur (2) commun , ces deux enroulements (3) étant raccordés à l'accumulateur d'énergie (1) respectif à la même polarité réversible de manière synchrone.

4. Dispositif selon la revendication 1, caractérisé en ce qu'à chaque accumulateur d'énergie (1) sont connectés de manière synchrone deux enroulements (3), de dimensions respectivement identiques et de polarité inverse d'un transformateur (2) commun, ces enroulements (3) étant raccordés de manière respectivement alternée à l'accumulateur d'énergie (1) respectif.

5. Dispositif selon les revendications 1 à 4, caractérisé en ce qu'une pluralité d'accumulateurs d'énergie (1) montés en série sont répartis en groupes d'accumulateurs (31, 32) dont les enroulements (3, ou 3') sont connectés à respectivement un transformateur commun pour chacun des groupes, tandis que deux enroulements terminaux respectivement (3 ou 3') ou deux autres enroulements (34 ou 34'), non affectés à un accumulateur, sont couplés.

6. Dispositif pour l'échange de charge entre une pluralité d'accumulateurs ou convertisseurs d'énergie (1) identiques montés en série, par lequel lesdits accumulateurs d'énergie (1) sont connectés de manière synchrone, au moyen de commutateurs rythmés (5,), à des enroulements (3), de dimensions et polarité identiques d'au moins un transformateur (2) de même polarité, par lequel un autre enroulement de démagnétisation (3") est monté sur la totalité des accumulateurs ou convertisseurs d'énergie (1), de telle manière que s'établit un flux d'énergie qui part des enroulements (3) passe par l'enroulement de démagnétisation (3") et parvient dans la totalité des accumulateurs ou convertisseurs d'énergie (1), ce flux conduisant à un échange de charge entre les accumulateurs d'énergie (1) qui de ce fait se trouvent montés en parallèle par couplage inductif.

7. Dispositif selon l'une des revendications 1 à 6, caractérisé en ce que le rythmeur peut être piloté par une commande séquentielle (51, 52, 53) qui peut être mise en circuit par un interrupteur d'activation (51) pour un laps de temps pré-programmable ou déterminé par une charge connectée.
